# EUROPÄISCHE PATENTSCHRIFT

(11) **EP 0 433 638 B1**
(45) Veröffentlichungstag und Bekanntmachung des Hinweises auf die Patenterteilung: **02.08.1995**
(21) Anmeldenummer: 90121363.7
(22) Anmeldetag: 08.11.1990
(51) Int. Cl.: B09B 3/00, B03B 9/06

(54) **Verfahren und Anlage zum Entsorgen von teilentsorgten Kühlgeräten**
Method and plant for the disposal of partly recycled refrigerators
Procédé et installation d'élimination d'éléments de réfrigérateurs partiellement recyclés

(30) Priorität: 18.12.1989 DE 3941742
(43) Veröffentlichungstag der Anmeldung: 26.06.1991
(73) Patentinhaber: SEG Umwelt-Service GmbH, D-66693 Mettlach (DE)
(72) Erfinder: Welter, Hubert, Dipl.-Ing., W-6642 Mettlach (DE); Walter, Hans-Peter, W-6642 Mettlach (DE); Walter, Alfred, W-6642 Mettlach (DE); Welter, Cornelius, Dr., W-6642 Mettlach (DE); Walter, Hermann-Josef, Dipl.-Betriebswirt, W-5510 Saarburg (DE)
(74) Vertreter: Vièl, Georg, Dipl.-Ing.

(56) Entgegenhaltungen:
- EP-A- 0 336 254
- DE-A- 2 850 130
- DE-U- 8 815 199
- DE-U- 8 902 602
- DE-U- 8 914 957
- US-A- 4 531 950

## Beschreibung

Die Erfindung bezieht sich auf ein Verfahren und eine Anlage zum Entsorgen von teilentsorgten Kühlgeräten, insbesondere zum Entsorgen von Fluorchlorkohlenwasserstoff-haltigem Polyurethanschaum.

In der Bundesrepublik Deutschland stehen jährlich etwa 2,3 Millionen ausgemusterte und unbrauchbare Kühlgeräte zur Entsorgung an. Diese jährliche Abfallmenge umfaßt ein Volumen von rd. 650 000 Kubikmetern und verbraucht ein Deponiervolumen von ca. 325 000 Kubikmetern, wenn die Kühlgeräte, wie heute noch vielfach üblich, in Deponien endgelagert werden.

Eine reine Deponierung der Kühlgeräte stellt jedoch eine unverantwortliche Umweltbelastung und Umweltzerstörung sowie eine nicht vertretbare Rohstoffverschwendung dar. Denn neben rückgewinnbaren, metallischen Werkstoffen und Kunststoffen enthalten die Kühlgeräte noch beachtliche Mengen an umweltgefährdenden Stoffen, beispielsweise je Gerät durchschnittlich 140 Gramm FCKW-haltiges Kühlmittel (R12) im Kühlkreislauf, ca. 300 Gramm FCKW-verseuchtes Verdichteröl im Kompressor und zwischen 300 und 1000 Gramm FCKW (R 11) in den Zellen der Polyurethan-(PUR)-Isolierschäumen, die bei der Deponierung der Kühlgeräte auch noch nach Jahren, während der Verrottung in die Luft freigesetzt werden bzw. im Erdreich versickern.

Im Bemühen, diese unbefriedigende Situation zu verbessern, wird seit jüngster Zeit in einigen Gemeinden und Städten eine Teilentsorgung der Kühlgeräte durchgeführt, die sich aber nur auf den kältetechnischen Teil beschränkt. Kühlmittel und Verdichteröle werden mit Spezialgeräten abgesaugt und umweltfreundlich entsorgt, Kompressor, Motor und bewegliche Teile werden entfernt.

Obwohl diese Teilentsorgung ein großer Schritt in die richtige Richtung ist, muß doch festgehalten werden, daß damit erst ca. 40 % der Schadstoffe eines Kühlgerätes erfaßt werden und das Problem, die FCKW-haltigen PUR-Schaumstoffe umweltfreundlich zu entsorgen und gegebenenfalls aufzubereiten, nicht gelöst ist.

Das Verbrennen von teilentsorgten Kühlgeräten ist ökologisch und ökonomisch sinnlos und stellt keine Lösung dar; wertvolle Rohstoffe werden zerstört und die Atmosphäre in unverantwortlicher Weise mit gefährlichen Schadstoffen belastet.

Fachleute warnen auch vor einer Verbrennung des PUR-Schaumstoffes in Müllverbrennungsanlagen, da bei Verbrennungstemperaturen unterhalb 1400 Grad Celsius gefährliche Dioxine entstehen.

Versuche, das FCKW-R11-Gas nach manueller Demontage bzw. maschineller Zerkleinerung der Kühlgeräte auf thermischem Weg durch Erhitzen der Schaumstoffe aus den Poren freizusetzen und rückzugewinnen, bergen nach Aussagen von Fachleuten wegen der möglichen chemischen Reaktionen und der Bildung von Schadgasen erhebliche Risiken. Außerdem wird der Rückgewinnungsgrad an FCKW-Gas nur mit 40 % höchstens 80 % eingeschätzt.

Bekannt ist beispielsweise eine Pilotanlage, in der nach manueller Demontage der Kühlgeräte die PUR-Schaumstoffe auf 170 Grad Celsius erhitzt und durch Beschuß mit Stahlkugeln zerkleinert werden. Dabei wird R11-Gas aus den Poren freigesetzt. Dieses Verfahren arbeitet umständlich, ist aufwendig, hat einen geringen Rückgewinnungsgrad und ist wegen der thermischen Behandlung nicht unproblematisch.

Im Prinzip mit einer solchen Pilotanlage befaßt sich die Druckschrift DE-U-88 15 199. Bei der Vorrichtung nach dieser Druckschrift werden nicht Kühlgeräte als Ganzes entsorgt, sondern lediglich die Hartschaumteile dem Kühlgerät entnommen, diese zerkleinert und FCKW teilweise zurückgewonnen. Im Gegensatz zu dem Merkmal 5 des erfindungsgemäßen Verfahrens erfolgt kein Mahlen des PUR-Schaumes zu Pulver (unter Zellgröße) , sondern die Hartschaumteile werden durch Stahlkugeln relativ grob zerkleinert. Dieses bekannte Verfahren arbeitet diskontinuierlich und kann für mit Wasserdampfsperren versehenen PUR-Schaum nicht eingesetzt werden. Das bei der bekannten Vorrichtung vorgesehene Erhitzen des PUR-Schaumes auf ca. 200 ° C ist nicht praktikabel; die für FCKW kritische Temperatur liegt bei etwa 190 ° C, so daß bei dem bekannten Verfahren die Gefahr einer chemischen Zerlegung von FCKW besteht, wodurch besonders gefährliche Schadstoffe entstehen können, es bilden sich sogenannte Radikale.

Nach einem anderen Verfahren ist vorgesehen, die Kühlgeräte mechanisch zu zerlegen und die Isolierschäume zu mahlen und zu erhitzen, um Gase aus den Poren freizusetzen. Dieses Verfahren ist wegen der thermischen Behandlung der Schäume auch risikobehaftet.

Eine weitere, projektierte Anlage verzichtet auf die Erhitzung der Isolierschaumstoffe. Nach Entsorgung des Kühlkreislaufes werden die Kühlgeräte, von der Umwelt abgekapselt, geschreddert, Fe- und NE-Metalle separiert und das zerkleinerte Restmaterial, das aus FCKW-haltigen PUR-Schaumstoffen und anderen nichtmetallischen Materialien besteht, unter hohem Druck zusammengepreßt und brikettiert. Dabei sollen bis zu 80 % des FCKW-Zellgases aus den Poren entweichen, das in einer Kondensationsanlage aufbereitet wird. Diese Anlage ist sehr aufwendig und unverhältnismäßig teuer; sie genügt außerdem mit einem Rückgewinnungsgrad von bestenfalls 80 % keinesfalls den Anforderungen nach vollständiger Entsorgung.

Bekannt ist auch das Schreddern von Kühlschränken. Dabei bleibt PUR-Schaum an Gehäuseteilen hängen, was beim Einschmelzen des Metalls zu gasförmigen Schadstoffen führt, die in die Atmosphäre entweichen. Eine umweltfreundliche Entsorgung von Kühlgeräten ist auf diese Weise nicht möglich.

Aus der Druckschrift EP-A1-0 336 254 ist eine Einrichtung zur Entsorgung von Treib- und/oder Kältemitteln bekannt. Aus diesem Dokument kann nichts hergeleitet werden, was eine Lehre in Richtung der Entsorgung von teilentsorgten Kühlgeräten gäbe.

Der Erfindung liegt die Aufgabe zugrunde, ein Verfahren zur umweltfreundlichen und wirtschaftlichen Vollentsorgung von Kühlgeräten anzugeben und eine geeignete Anlage zur Durchführung des Verfahrens bereitzustellen.

Diese Aufgabe wird mit dem erfindungsgemäßen Verfahren gemäß Anspruch 1 zum Entsorgen von teilentsorgten Kühlgeräten, insbesondere zum Entsorgen von Fluorchlorkohlenwasserstoff-haltigem Polyurethan-Schaum gelöst.

Im Rahmen einer bevorzugten Ausführung der Erfindung ist vorgesehen, daß der zerstückelte, Reststoff-freie PUR-Schaum in ein vor dem Mahlwerk angeordnetes Vorratssilo geblasen und dem Mahlwerk dosiert zugeführt wird.

Als vorteilhaft hat es sich erwiesen, daß das gemahlene PUR-Pulver in einem zweiten, hinter dem Mahlwerk angeordneten Vorratssilo gesammelt und über eine Schleuse aus dem Entsorgungssystem ausgegeben wird.

Zur Vermeidung einer Explosionsgefahr ist vorgesehen, daß das Mahlwerk vor Inbetriebnahme mit Fluorchlorkohlenwasserstoff-Gas geflutet wird.

Zum Durchführen des erfindungsgemäßen Verfahrens ist eine gasdicht schließbare, unter Unterdruck betreibbare, an mehreren Stellen abpumpbare Entsorgungsanlage vorgesehen, die eine Zerkleinerungsanlage aufweist, wobei an mehreren Stellen der Entsorgungsanlage Absaugleitungen zum Abführen des bei der Entsorgung entstehenden Fluorchlorkohlenwasserstoff-Luft-Gemisches vorgesehen sind und wobei das Gemisch in einem Kondensationssammler verfüssigbar ist, daß drei übereinander angeordnete, eine Zerkleinerungsanlage bildende Schneideinrichtungen vorhanden sind, die Rühr- und Förderschnecken mit paddelähnlichen Zusatzelementen zum Transport und Abtrennen der an dem PUR-Schaum haftenden Stoffen zugeordnet sind, daß eine aus einem senkrecht angeordneten Rohr bestehende, von oben beschickbare Separierung vorgesehen ist, in der mittels eines im Gegenstrom geführten Luftstromes eine Trennung des leichteren PUR-Schaumes von den schwereren, nach unten fallenden Reststoffen durchführbar ist, daß der PUR-Schaum nach oben in ein angeschlossenes Mahlwerk blasbar ist, während die Reststoffe in einer Ausgabeschnecke aus der Entsorgungsanlage austragbar sind, daß das Mahlwerk als Gebläsemühle ausgebildet ist, in der der PUR-Schaum zu feinem Pulver vermahlbar ist, das über eine Schleuse einer Abfüllstation außerhalb der Entsorgungsanlage zuführbar ist und daß die Entsorgungsanlage (15) eine kälteisolierte Kammer (12) zum Abfüllen des flüssigen Fluorchlorkohlenwasserstoff-Wasser-Gemisches aufweist.

Vorteilhaft ist es, daß vor dem Mahlwerk ein Vorratssilo vorgesehen ist.

Eine weitere vorteilhafte Ausbildung der Erfindung besteht darin, daß hinter dem Mahlwerk ein weiteres Vorratssilo vorgesehen ist.

Nach einer weiteren Ausbildung der Erfindung ist vorgesehen, daß das Mahlwerk und das Vorratssilo in einem separat geregelten, mit Berstscheiben versehenen Unterdruckraum angeordnet sind, der mittels zweier Zellenradschleusen gegenüber dem übrigen Entsorgungssystem abschließbar ist.

Das Risiko einer Staubexplosion beim Anfahren der Entsorgungsanlage wird dadurch gemindert, daß das Mahlwerk über eine Leitung mit beheiztem Fluorchlorkohlenwasserstoff-Gas flutbar ist.

Des weiteren kann es erfindungsgemäß zweckmäßig sein, daß hinter der Separierung ein Magnetabscheider angeordnet ist.

Die mit der Erfindung erzielbaren Vorteile bestehen insbesondere darin, daß eine vollständige Entsorgung von Kühlgeräten umweltfreundlich und wirtschaftlich durchführbar ist, wobei über 99 % der in den PUR-Schäumen gebundenen Fluorchlorkohlenwasserstoff-haltigen Gase erfaßt werden und ebenso wie die übrigen, zurückgewonnenen Reststoffe einer Wiederverwertung zur Verfügung stehen.

Anhand eines Ausführungsbeispieles und den Zeichnungen werden das erfindungsgemäße Verfahren und eine geeignete Anlage zum Durchführen des Verfahrens beschrieben.

Es zeigt
- Fig. 1: ein Verfahrensschema zur Entsorgung von Kühlgeräten gemäß der Erfindung
- Fig. 2: eine schematische Darstellung einer erfindungsgemäßen, mobilen Entsorgungsanlage,
- Fig. 3: einen prinzipiellen Aufbau der Entsorgungsanlage, schematisch dargestellt,
- Fig. 4: eine Detailzeichnung A aus Fig. 3, einen Magnetabscheider betreffend, und
- Fig. 5: eine verfeinerte, schematische Darstellung der Entsorgungsanlage.

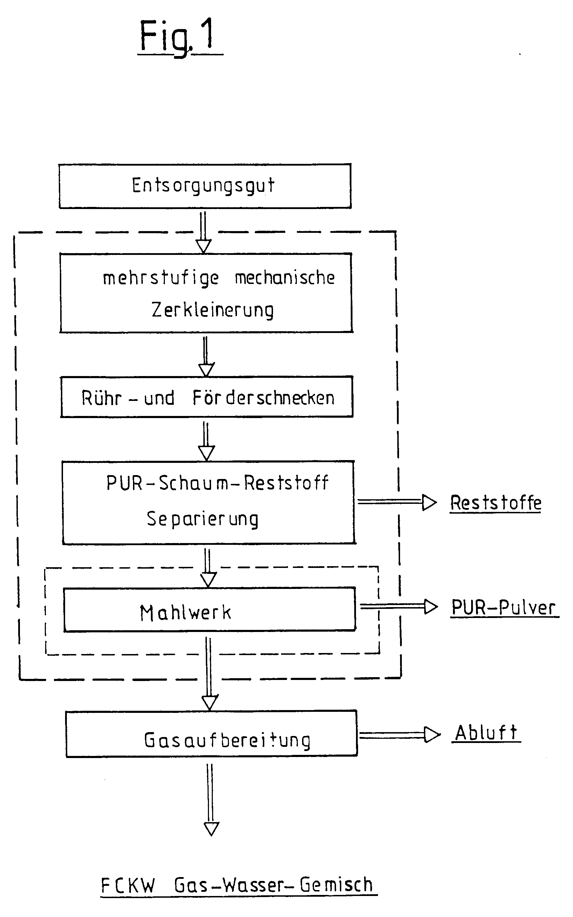

Gemäß dem in Fig. 1 dargestellten Verfahrensschema erfolgt die vollständige Entsorgung von teilentsorgten Kühlgeräten durch mehrstufige Zerkleinerung des Entsorgungsgutes, durch Transport des zerkleinerten Materials auf Rühr- und Förderschnecken unter gleichzeitigem Ablösen der an dem PUR-Schaum anhaftenden Stoffen, wie Metall und Kunststoff, durch Separieren des PUR-Schaumes und der Reststoffe, durch Mahlen des Reststoff-freien PUR-Schaumes zu feinem Pulver und durch Absaugen und Aufbereiten des während des Entsorgungsvorganges anfallenden Fluorchlorkohlenwasserstoff-haltigen Gases. Die abgetrennten Reststoffe und das gemahlene PUR-Pulver werden getrennt aus der Entsorgungsanlage ausgetragen, das abgesaugte Fluorchlorkohlenwasserstoff-haltige Gas wird gereinigt, kondensiert und als flüssiges Fluorchlorkohlenwasserstoff-Wasser-Gemisch aufgesammelt.

Das Entsorgungsverfahren wird in einer gasdicht gekapselten, an mehreren Stellen abpumpbaren Unterdruckkammer durchgeführt, wobei das Mahlwerk in einem zusätzlich noch separat geregeltem Unterdruckraum angeordnet ist.

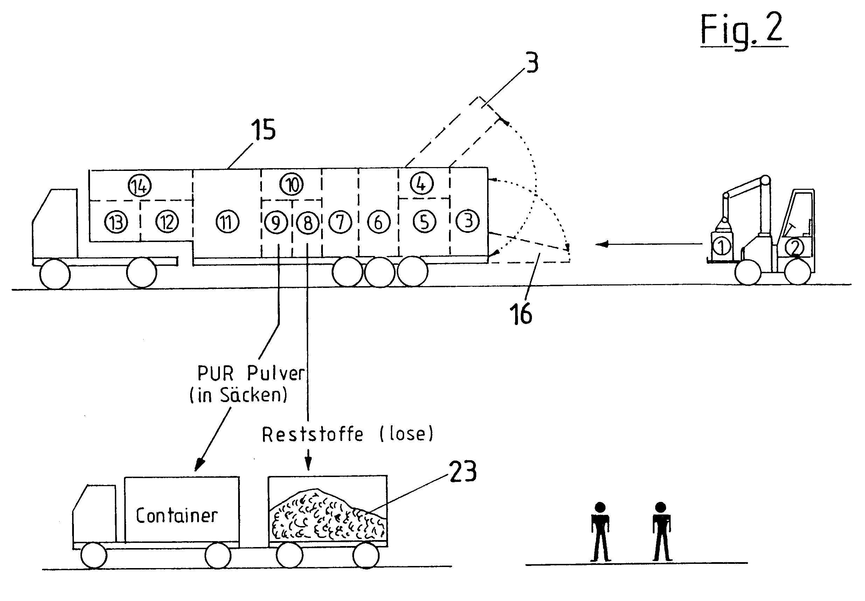

Als sehr vorteilhaft hat sich eine mobile Entsorgungsanlage 15 gemäß Fig. 2 erwiesen, die schnell und problemlos von Einsatzort zu Einsatzort transportierbar und mit wenigen Handgriffen betriebsbereit ist.

Die zu entsorgenden Kühlgeräte 1 werden vor Eingabe in die Entsorgungsanlage 15 teilentsorgt, d. h. Kompressor, Motor und Glasteile werden entfernt, Fluorchlorkohlenwasserstoff-haltiges Kühlmittel und Verdichteröl abgesaugt und umweltfreundlich gesammelt, beispielsweise in der in dem DE-U-89 02 602 beschriebenen Anlage zur Entsorgung von Kühlaggregaten.

Die derart aufbereiteten Kühlgeräte 1 werden, wie in Fig. 2 gezeigt, mit einem auf einem Stellplatz 11 in der mobilen Entsorgungsanlage 15 mitgeführten geländegängigen Beschickungsfahrzeug 2 zur Entsorgungsanlage 15 transportiert und auf der am Heck der Entsorgungsanlage 15 in waagerechter Stellung befindlichen Laderampe 16 abgelegt. Auf der Laderampe 16 finden bis zu zehn normale Kühlgeräte 1 Platz, die in einem Arbeitsgang in die unter Unterdruck stehende Entsorgungsanlage 15 einschleusbar sind. Dadurch gelingt es, die beim Beschickungsvorgang in die Entsorgungsanlage 15 eingeschleppte Fehlluftmengen möglichst gering zu halten.

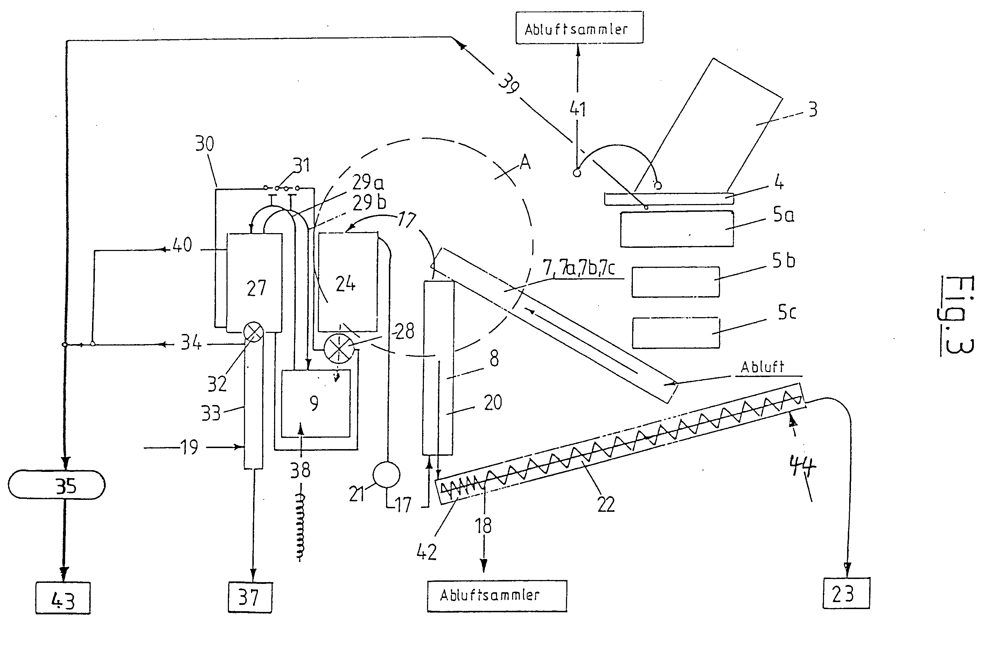

Nach Aufgabe der Kühlgeräte 1 auf die Laderampe 16 wird der vollautomatische Arbeitsablauf in der Entsorgungsanlage 15 über eine Funkfernsteuerung von dem Beschickungsfahrzeug 2 aus eingeleitet. Die Laderampe 16 schwenkt, wie in Fig. 2 angedeutet, in eine heizbare Beschickungskabine 3, die gasdicht verschließbar und über die zu einem Abluftsammler führende Leitung 41, in Fig. 3 dargestellt, abpumpbar ist. Anschließend wird die Beschickungskabine 3 nach oben geschwenkt und gasdicht mit der Schleusenkammer 4 der Entsorgungsanlage 15 verbunden.

Nach Öffnen eines Schleusenschiebers werden die Kühlgeräte 1 über eine in der Schleusenkammer 4 befindliche Eindrückvorrichtung gezielt einer mehrstufigen Zerkleinerungsanlage 5 zugeführt. In dem Ausführungsbeispiel besteht die Zerkleinerungsanlage 5 aus drei übereinander angeordneten Schneideinrichtungen 5a, 5b, 5c, die zur Optimierung des Materialdurchlaufs mit einer automatischen, lastabhängigen Reversiereinrichtung und gegenseitiger elektrischer Verriegelung sämtlicher Antriebe ausgerüstet und Füllstandüberwachung geregelt sind.

Beim Durchlaufen der Zerkleinerungsanlage 5 wird das Entsorgungsgut in Würfel von ca. zehn Millimeter Kantenlänge zerstückelt.

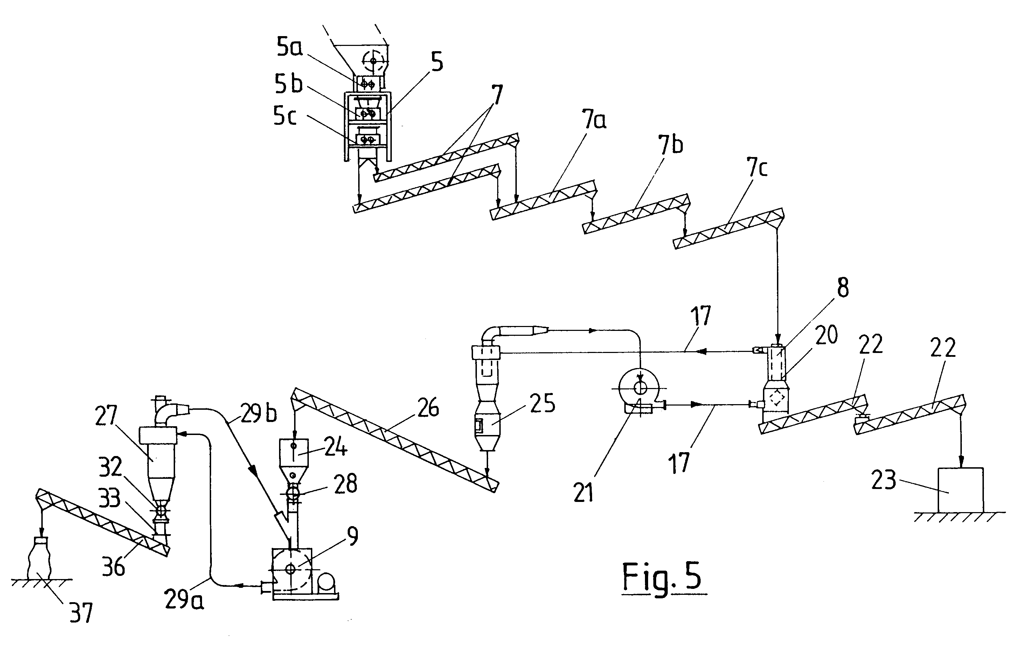

Von der Zerkleinerungsanlage 5 gelangt das zerkleinerte Material entsprechend Fig. 5 zunächst in zwei parallel angeordnete Rühr- und Förderschnecken 7 und von dort in drei hintereinander angeordnete, einsträngige Rühr- und Förderschnecken 7a, 7b, 7c. Die Rühr- und Förderschnecken 7, 7a, 7b, 7c sind als Steigschnecken ausgebildet und mit Zusatzelementen, sogenannten Paddeln versehen, die ein Rühren und Mischen und damit ein Aneinanderreiben des zerkleinerten Materials bewirken, um den PUR-Schaum von anhaftenden Stoffen, wie Metall, Kunststoff u. ä., zu lösen. Die Förderschnecken 7a, 7b, 7c werden mit höheren, von Schnecke zu Schnecke sich steigernden Umdrehungsgeschwindigkeiten betrieben, um durch dadurch erzeugte Pralleffekte ein vollständiges Lösen der an dem PUR-Schaum anhaftenden Reststoffen zu erreichen.

Die Rühr- und Förderschnecken 7, 7a, 7b, 7c führen das derart aufbereitete Material einer PUR-Schaum-Separierung 8 mengendosiert zu. Die Separierung 8 besteht aus einem senkrecht angeordneten Rohr 20, das von oben das zerkleinerte Material erhält und von unten von einem in einem Ventilator 21 erzeugten, einstellbaren Luftstrom 17 durchblasen wird. In der Fallstrecke der Separierung 8 wird das eingegebene Material getrennt: die Reststoffe fallen schwerkraftbedingt entgegen dem Luftstrom 17 nach unten auf eine schwenkbare Ausgabeschnecke 22 und werden aus der Entsorgungsanlage 15 in bereitstehende Reststoffcontainer 23 befördert, während der leichtere PUR-Schaum nach oben in ein angeschlossenes Vorratssilo 24 geblasen wird.

Durch die besondere Gewindeausführung der Ausgabeschnecke 22 - am Materialeinlauf ist das Gewinde 42 sehr dicht, wie in Fig. 3 angedeutet - und durch entgegenströmende, beheizte Frischluft 44 wird gewährleistet, daß in der geschlossenen Entsorgungsanlage 15 befindliche Fluorchlorkohlenwasserstoff-Gase nicht ins Freie entweichen können.

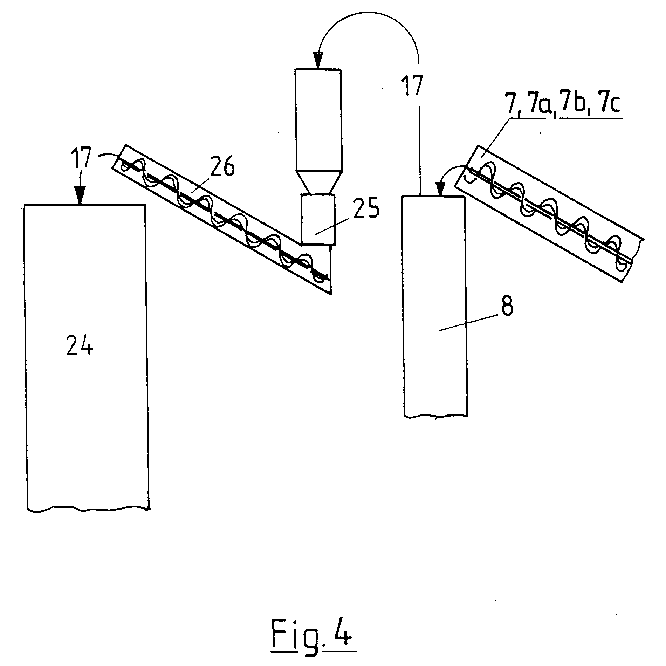

Zum Abscheiden evtl. an dem PUR-Schaum noch anhaftender Eisenmetalle, kann wie in der Detailzeichnung in Fig. 4 dargestellt, zwischen Separierung 8 und Vorratssilo 24 zusätzlich noch ein Magnetabscheider 25 angeordnet werden. Das den Magnetabscheider 25 bildende Fallrohr ist mit Magneten versehen, die das Aussondieren der ferromagnetischen Verunreinigungen während des freien Falles des PUR-Schaumes innerhalb der Fallstrecke bewirken. Der Eisenmetall-freie PUR-Schaum wird in der Förderschnecke 26 dem Vorratssilo 24 zugeführt. Die ferromagnetischen Verunreinigungen werden über Sonderförderschnecken, die in den Zeichnungen nicht dargestellt sind, aus der Entsorgungsanlage 15 befördert.

Der vollständig separierte PUR-Schaum gelangt über eine Zellenradschleuse 28 dosiert von dem Vorratssilo 24 in das Mahlwerk 9. Das Mahlwerk 9 stellt eine Gebläsemühle dar. Während des Mahlprozesses wird der PUR-Schaum zu Pulver der Korngröße 0,1 mm zerkleinert; alle Schaumstoffzellen werden dabei zerstört und das Fluorchlorkohlenwasserstoff-haltige Blähgas R11 wird freigesetzt. Danach wird das PUR-Pulver-Fluorchlorkohlenwasserstoff-Luft-Gemisch lüftungstechnisch in ein Zyklon-Vorratssilo 27 gefördert.

Die Luftströme 29a, 29b in Fig. 3 und 5 von dem Mahlwerk 9 zum Vorratssilo 27 und zurück stellen einen eigenen Kreislauf dar und beeinträchtigen nicht die Unterdruckverhältnisse innerhalb der geschlossenen Entsorgungsanlage 15.

Das Mahlwerk 9 und das Pulver-Vorratssilo 27 befinden sich, wie in Fig. 3 angedeutet, außerdem zur Sicherheit vor einer Staubexplosion in einem separat geregelten, mit Berstscheiben 31 zur gezielten Führung der Druckwelle über Dach versehenen Unterdruckraum 30.

Zusätzliche Sicherheitsmaßnahmen, wie Druckentlastungen in den Zu- und Abluftleitungen des Vorratssilos 27, Kühlung des Luftstroms 29a des Mahlwerks 9 sowie die geringe Sauerstoff- und die hohe R11-Gas-Konzentration und fehlende Zündquellen in dem Unterdurckraum 30 dürften eine Staub-Explosion ausschließen.

Beim Neuanfahren der Entsorgungsanlage 15 nach längeren Pausen, beispielsweise nach Stillstand über Nacht, ist zur Vermeidung einer Explosion in vorteilhafter Weise vorgesehen, das Mahlwerk 9 über eine beheizbare Zuleitung 38 mit Fluorchlorkohlenwasserstoff-Gas aus dem Sammler 35 zu fluten.

Das gemahlene PUR-Pulver wird aus dem Vorratssilo 27, der mit Füllstandsüberwachung ausgerüstet ist, über eine Zellenradschleuse 32 in ein Fallrohr 33 gegeben und dort mit beheizter Frischluft 19 gewaschen. Dabei wird das restliche R11-Gas-Luft-Gemisch abgesaugt und über die Leitung 34 dem Sammler 35 zugeführt. Das reine PUR-Schaumpulver gelangt danach in einer Transportschnecke 36 in die Abfüllstation 37.

Die Aufbereitung des in den Schaumzellen gebundenen Fluorchlorkohlenwasserstoff-haltigen Blähgases beginnt mit der Zerkleinerung des PUR-Schaumes. Das beim Zerkleinern und Mahlen freigesetzte Fluorchlorkohlenwasserstoff-Gas wird, wie in Fig. 3 dargestellt, über die Leitungen 39, 40 von der Zerkleinerungsanlage 5 und dem Pulver-Silo 27 abgesaugt, gemeinsam mit dem beim Auswaschen des PUR-Pulvers anfallenden und über die Leitung 34 abgepumpten Fluorchlorkohlenwasserstoff-haltigem Gas gefiltert, d. h. von Staub und Schwebeteilchen befreit, und durch einen Kompressor verdichtet, in den Kondensationsammler 35 gefördert. Das in Kältestufen auskondensierte Fluorchlorkohlenwasserstoff-Wasser-Gemisch wird von dem Sammler 35 in geeignete Tranportbehälter 43 geleitet, die in einer kälteisolierten Kammer 12 der mobilen Entsorgungsanlage 15 untergebracht sind (Fig. 2).

Aus wirtschaftlichen Gründen werden auf diesem Wege mehr als 90 % des in dem PUR-Schaum gebundenen Fluorchlorkohlenwasserstoff-haltigen Gases kondensiert. Zur 100 %igen Rückgewinnung des Fluorchlorkohlenwasserstoff-Gases werden die an mehreren Stellen aus der Anlage 15 abgesaugte Abluft und nicht kondensiertes Fluorchlorkohlenwasserstoff-Gas aus dem Sammler 35 im Wechsel arbeitenden Aktivkohlefilter, die in den Zeichnungen nicht dargestellt sind, zugeleitet. Befindet sich ein Filter im Absorptionseinsatz, dann wird der andere Filter durch Desorption regeneriert.

Die Abluftkonzentrationen werden über eine Meßeinrichtung kontinuierlich überwacht und die Sättigung des im Einsatz befindlichen Aktivkohlefilters festgestellt. Bei Sättigung wird die Desorptionsphase des Filters eingeleitet und der regenerierte andere Filter auf Absorption geschaltet.

Der Rückgewinnungsgrad durch die Aktivkohlefilter beträgt ebenfalls ca. 90 %, so daß durch die Entsorgungsanlage 15 insgesamt mehr als 90 % des Fluorchlorkohlenwasserstoff-haltigen Gases verflüssigt und entsorgt werden. Die ins Freie geleiteten Abgase werden über die gesetzlichen Forderungen hinaus kontinuierlich meßtechnisch überwacht und die dann festgestellten Meßdaten fortlaufend dokumentiert.

Die zur Gastechnik 10 gehörenden Geräte und Anlagenteile sind weitgehend, wie in Fig. 2 angedeutet, im Mittelteil der Entsorgungsanlage 15 untergebracht.

Aufgrund der umfangreichen Verkettungen der verschiedenen Anlagenteile bzw. Bearbeitungsverfahren erfolgt der automatische Betrieb der Entsorgungsanlage über eine speicherprogrammierbare Elektroniksteuerung 6 (Fig. 2). Die Funksteuerung des Beschickungszyklus ist mit der Steuerung der Entsorgungsanlage 15 gekoppelt.

Zum ortsunabhängigen Einsatz ist die mobile Entsorgungsanlage 15 mit einer eigenen Energieversorgung 13 ausgerüstet, die im vorderen Teil der Entsorgungsanlage 15 lärmgekapselt untergebracht ist. Die Dieselabgase des Antriebsaggregates werden mit einem regenerierbaren Rußfilter 14 umweltfreundlich gereinigt, so daß auch ein Hallenbetrieb der Entsorgungsanlage 15 möglich ist.

Die Einsatzmöglichkeiten der beschriebenen Entsorgungsanlage 15 erstrecken sich über die Entsorgung von Kühlgeräten hinausgehend ganz allgemein auf die Entsorgung von Fluorchlorkohlenwasserstoff-haltigen PUR-Schäumen wie beispielsweise Schall- und Wärmeisoliermaterialien, Produktionsabfällen sowie Kraftfahrzeugteilen wie PUR-Schaum enthaltende Armaturen- und sonstige Hartschaumstoffteile.

## Patentansprüche

1. Verfahren zum Entsorgen von teilentsorgten Kühlgeräten (1) , insbesondere zum Entsorgen von Fluorchlorkohlenwasserstoff-haltigem Polyurethan-Schaum, wobei ein gasdicht schließbares und unter Unterdruck betreibbares Entsorgungssystem vorgesehen ist, eine Zerstückelung des PUR-Schaums in Würfel erfolgt, eine Rührschnecke vorhanden ist, das Fluorchlorkohlenwasserstoff-Luft-Gemisch an mehreren Stellen aus dem Entsorgungssystem abgesaugt wird und das Gemisch kondensiert und der flüssige Fluorchlorkohlenwasserstoff in Behältern gesammelt wird, **dadurch gekennzeichnet,** daß die teilentsorgten Kühlgeräte (1) in ein Entsorgungssystem (3, 4) gebracht und in einer mehrstufigen Zerkleinerungsanlage (5) in kleine Würfel zerstückelt werden, die in nachgeordneten Rühr- und Förderschnecken (7, 7c) transportiert und bearbeitet werden, wobei der PUR-Schaum von anhaftenden Stoffen befreit wird,
- daß der PUR-Schaum und die Reststoffe in einer Separieranlage (8) voneinander getrennt und die Reststoffe aus dem Entsorgungssystem befördert werden,
- während der Reststoff-freie PUR-Schaum in einem Mahlwerk (9) zu Pulver vermahlen wird, wobei die Zellen des PUR-Schaumes zerstört werden und der gesamte Fluorchlorkohlenwasserstoff freigesetzt wird,
- daß dieses bei der Entsorgung entstehende Fluorchlorkohlenwasserstoff-Luft-Staub-Gemisch an mehreren Stellen aus dem Entsorgungssystem abgesaugt und gefiltert wird,
- das gereinigte Gas-Luft-Gemisch kondensiert und als flüssiges Fluorchlorkohlenwasserstoff-Wasser-Gemisch in entsprechenden Behältern (43) gesammelt wird, und
- daß das Fluorchlorkohlenwasserstoff-freie PUR-Pulver einer Abfüllstation (37) zugeführt wird.

2. Verfahren nach Anspruch 1, dadurch **gekennzeichnet,** daß der zerstückelte, Reststoff-freie PUR-Schaum in ein vor dem Mahlwerk (9) angeordnetes Vorratssilo (24) geblasen und dem Mahlwerk (9) dosiert zugeführt wird.

3. Verfahren nach Anspruch 1, dadurch **gekennzeichnet,** daß das gemahlene PUR-Pulver in einem zweiten, hinter dem Mahlwerk (9) angeordneten Vorratssilo (24) gesammelt und über eine Schleuse (28) aus dem Entsorgungssystem ausgegeben wird.

4. Verfahren nach Anspruch 1, dadurch **gekennzeichnet,** daß das Mahlwerk (9) vor Inbetriebnahme mit Fluorchlorkohlenwasserstoff-Gas geflutet wird.

5. Anlage zum Durchführen des Verfahrens nach Anspruch 1, wobei eine gasdicht schließbare, unter Unterdruck betreibbare, an mehreren Stellen abpumpbare Entsorgungsanlage vorhanden ist, die eine Zerkleinerungsanlage aufweist, wobei an mehreren Stellen der Entsorgungsanlage Absaugleitungen zum Abführen des bei der Entsorgung entstehenden Fluorchlorkohlenwasserstoff-Luft-Geschmisches vorgesehen sind und wobei das Gemisch in einem Kondensationssammler verflüssigbar ist, **dadurch gekennzeichnet,** daß drei übereinander angeordnete, eine Zerkleinerungsanlage (5) bildende Schneideinrichtungen (5a, 5b, 5c) vorhanden sind, die Rühr- und Förderschnecken (7, 7a, 7b, 7c) mit paddelähnlichen Zusatzelementen zum Transport und Abtrennen der an dem PUR-Schaum haftenden Stoffen zugeordnet sind, daß eine aus einem senkrecht angeordneten Rohr (20) bestehende, von oben beschickbare Separierung (8) vorgesehen ist, in der mittels eines im Gegenstrom geführten Luftstromes (17) eine Trennung des leichteren PUR-Schaumes von den schwereren, nach unten fallenden Reststoffen durchführbar ist, daß der PUR-Schaum nach oben in ein angeschlossenes Mahlwerk (9) blasbar ist, während die Reststoffe in einer Ausgabeschnecke (22) aus der Entsorgungsanlage (15) austragbar sind, daß das Mahlwerk (9) als Gebläsemühle ausgebildet ist, in der der PUR-Schaum zu feinem Pulver vermahlbar ist, das über eine Schleuse (32) einer Abfüllstation (37) außerhalb der Entsorgungsanlage (15) zuführbar ist und daß die Entsorgungsanlage (15) eine kälteisolierte Kammer (12) zum Abfüllen des flüssigen Fluorchlorkohlenwasserstoff-Wasser-Gemisches aufweist.

6. Anlage nach Anspruch 5, dadurch **gekennzeichnet,** daß vor dem Mahlwerk (9) ein Vorratssilo (24) vorgesehen ist.

7. Anlage nach Anspruch 5, dadurch **gekennzeichnet,** daß hinter dem Mahlwerk (9) ein weiteres Vorratssilo (27) vorgesehen ist.

8. Anlage nach Anspruch 5 und 7, dadurch **gekennzeichnet,** daß das Mahlwerk (9) und das Vorratssilo (27) in einem separat geregelten, mit Berstscheiben (31) versehenen Unterdruckraum (30) angeordnet sind, der mittels zweier Zellenradschleusen (28, 32) gegenüber dem übrigen Entsorgungssystem abschließbar ist.

9. Anlage nach Anspruch 5, dadurch **gekennzeichnet,** daß das Mahlwerk (9) über eine Leitung (38) mit beheiztem Fluorchlorkohlenwasserstoff-Gas flutbar ist.

10. Anlage nach Anspruch 1, dadurch **gekennzeichnet,** daß hinter der Separierung (8) ein Magnetabscheider (25) angeordnet ist.

## Claims

1. A method for the disposal of partly recycled refrigerators (1), in particular for the disposal of chlorofluorocarboncontaining polyurethane foam, wherein a disposal system is provided which is sealable so as to be gas-tight and is operable at low pressure, the polyurethane foam is cut into cubes, a stirring screw is provided, the chlorofluorocarbon/air mixture is sucked off from the disposal system at a plurality of locations and the mixture is condensed and the liquid chlorofluorocarbon collected in containers, characterised in that the partly recycled refrigerators (1) are placed into a disposal system (3,4) and cut into small cubes in a multi-stage comminution unit (5), the said cubes being transported and processed in subsequently arranged stirring and conveying screws (7, 7c), the polyurethane foam being liberated of adherent substances,
- in that the polyurethane foam and the residual substances are separated from each other in a separating unit (8) and the residual substances are conveyed out of the disposal system,
- whereas the polyurethane foam, free of residual substances, is ground into powder in a grinding mill (9), the cells of the polyurethane foam being destroyed and all the chlorofluorocarbon being released,
- in that this chlorofluorocarbon /air/powder mixture, formed during disposal, is sucked off from the disposal system at a plurality of locations and filtered,
- the purified gas / air mixture is condensed and collected in suitable containers (43) as a liquid chlorofluorocarbon/water mixture,
- and in that the chlorofluorocarbon-free polyurethane powder is fed to a filling station (37).

2. A method according to claim 1, characterised in that the cut-up polyurethane foam, free of residual substances, is blown into a storage bin (24) arranged upstream of the grinding mill (9) and fed to the grinding mill (9) in measured quantities.

3. A method according to claim 1, characterised in that the ground polyurethane powder is collected in a second storage bin (24) [sic - 27] arranged downstream of the mill (9) and is discharged from the disposal system via a sluice (28) [sic - 32].

4. A method according to claim 1, characterised in that the grinding mill (9) is flooded with chlorofluorocarbon gas prior to operation.

5. An installation for carrying out the method according to claim 1, wherein a disposal system is provided which is sealable so as to be gas-tight, is operable at low pressure, Is evacuatable at a plurality of locations and has a comminution unit, wherein suction pipes are provided at a plurality of locations in the disposal system for drawing off the chlorofluorocarbon / air mixture formed during disposal and wherein the mixture is liquefiable in a condensation collector, characterised in that three cutting arrangements (5a, 5b, 5c) arranged one above the other and forming a comminution unit (5) are provided and are associated with stirring and conveying screws (7,7a,7b,7c) provided with paddle-like auxiliary members for transporting and removing the substances adhering to the polyurethane foam, in that a separating device (8) is provided which comprises a vertically arranged pipe (20) and is chargeable from above and in which the lighter polyurethane foam can be separated from the heavier sinking residual substances by means of an air flow (17) fed in countercurrent, in that the polyurethane foam can be blown upwards into an adjoining grinding mill (9) while the residual materials are dischargeable from the disposal system (15) in a discharge screw (22), in that the grinding mill (9) is constructed as a blast mill in which the polyurethane foam is grindable into fine powder which can be fed to a filling station (37) outside the disposal system (15) via a sluice (32), and in that the disposal system (15) has a cold-insulated chamber (12) for decanting the liquid chlorofluorocarbon / water mixture.

6. An installation according to claim 5, characterised in that a storage bin (24) is provided upstream of the grinding mill (9).

7. An installation according to claim 5, characterised in that a further storage bin (27) is provided downstream of the grinding mill (9).

8. An installation according to claims 5 and 7, characterised in that the grinding mill (9) and the storage bin (27) are arranged in a separately controlled low-pressure chamber (30) provided with rupture discs (31) and sealable relative to the remainder of the disposal system by means of two cellular-wheel sluices (28,32).

9. An installation according to claim 5, characterised in that the grinding mill (9) can be flooded with heated chlorofluorocarbon gas via a pipe (38).

10. An installation according to claim 1, characterised in that a magnetic separator (25) is arranged downstream of the separating device (8).

## Revendications

1. Procédé pour éliminer les réfrigérateurs (1) partiellement recyclés, notamment pour l'élimination de mousse de polyuréthane contenant un hydrocarbure fluorochloré, selon lequel on prévoit un système d'élimination, qui peut être fermé d'une manière étanche aux gaz et peut fonctionner en dépression, on effectue un morcellement de la mousse de polyuréthane en cubes, il est prévu une vis de brassage, on aspire le mélange hydrocarbure fluorochloré - air en plusieurs points du système d'élimination et on condense le mélange et on recueille l'hydrocarbure fluorochloré liquide dans des cuves, caractérisé par le fait qu'on introduit les réfrigérateurs (1) partiellement recyclés dans un système d'élimination (3,4) et qu'on les morcelle, dans une installation de fragmentation (4) à plusieurs étages, en petits cubes, qui sont transportés et traités dans des vis de brassage et de convoyage (7,7c) montées en aval, la mousse de polyuréthane étant débarassée de substances qui y adhèrent,
- qu'on sépare les unes des autres la mousse de polyuréthane et les substances résiduelles dans une installation de séparation (8) et qu'on transporte les substances résiduelles hors du système d'élimination,
- tandis qu'on broye la mousse de polyuréthane exempte de substances résiduelles, dans un broyeur (9) pour obtenir une poudre, les cellules de mousse de polyuréthane étant détruites et tout l'hydrocarbure fluorochloré étant dégagé,
- qu'on aspire ce mélange hydrocarbure fluorochloré - air - poussière, qui se forme lors de l'élimination, en plusieurs points du système d'élimination et on le filtre,
- que l'on condense le mélange gaz - air épuré et on le recueille en tant que mélange liquide hydrocarbure fluorochloré - eau, dans des cuves correspondantes (43), et
- qu'on envoie la poudre de polyuréthane, exempte de l'hydrocarbure fluorochloré, à un poste d'évacuation (37).

2. Procédé suivant la revendication 1, caractérisé par le fait qu'on insuffle la mousse de polyuréthane morcellée et exempte de substances résiduelles, dans un silo de stockage (24) disposé en amont du broyeur (9) et qu'on l'envoie d'une manière dosée au broyeur (9).

3. Procédé suivant la revendication 1, caractérisé par le fait que l'on recueille la poudre de polyuréthane broyée dans un second silo de stockage (24) disposé en aval du broyeur (9) et qu'on la retire du système d'élimination, par l'intermédiaire d'un sas (28).

4. Procédé suivant la revendication 1, caractérisé par le fait qu'avant la mise en service, on remplit le broyeur (9) d'hydrocarbure fluorochloré gazeux.

5. Installation pour la mise en oeuvre du procédé suivant la revendication 1, dans laquelle il est prévu une installation d'élimination, qui peut être fermée d'une manière étanche aux gaz, qui peut fonctionner en dépression et de laquelle un prélèvement par pompage peut être exécuté en plusieurs points, et qui comporte une installation de fragmentation, des conduits d'aspiration étant prévus en plusieurs points de l'installation d'élimination pour évacuer le mélange hydrocarbure fluorochloré - air qui se forme lors de l'élimination, le mélange pouvant être liquéfié dans un collecteur à condensation, caractérisée par le fait que sont prévus trois dispositifs de coupe (5a,5b,5c), qui sont superposés et forment une installation de fragmentation (5) et qui sont associés à des vis de brassage et de convoyage (7,7a,7b,7c) comportant des éléments supplémentaires semblables à des palettes pour l'entraînement et la séparation des substances qui adhèrent à la mousse de polyuréthane, qu'il est prévu une unité de séparation (8), qui est constituée d'un tube (20) vertical, qui peut être chargée par le haut et dans laquelle une séparation de la mousse de polyuréthane plus légère que les substances résiduelles plus lourdes, qui tombent, peut être exécutée au moyen d'un courant d'air (17) passant à contre-courant, que la mousse de polyuréthane peut être insufflée vers le haut dans un broyeur raccordé (9), tandis que les substances résiduelles peuvent être retirées de l'installation d'élimination (15), dans une vis de sortie (22), que le broyeur (9) est réalisé sous la forme d'un broyeur à ventilateur, dans lequel la mousse de polyuréthane peut être broyée en une poudre fine, qui peut être envoyée par l'intermédiaire d'un sas (32) à un poste d'évacuation (37) à l'extérieur de l'installation d'élimination (15), et que l'installation d'élimination (15) comporte une chambre (12) isolée vis-à-vis du froid et servant à évacuer le mélange liquide hydrocarbure fluorochloré - eau.

6. Installation suivant la revendication 5, caractérisée par le fait qu'un silo de stockage (24) est prévu en amont du broyeur (9).

7. Installation suivant la revendication 5, caractérisée par le fait qu'un autre silo de stockage (27) est prévu en aval du broyeur (9).

8. Installation suivant la revendication 5 ou 7, caractérisée par le fait que le broyeur (9) et le silo de stockage (27) sont disposés dans une chambre à dépression (30), qui est régulée indépendamment, qui comporte des plaques (31) destinées à se rompre et qui peut être fermée vis-à-vis du reste du système d'élimination, au moyen de deux sas (28,32) comportant des roues à alvéoles.

9. Installation suivant la revendication 5, caractérisée par le fait que le broyeur (9) peut être rempli, par l'intermédiaire d'une canalisation (38), d'hydrocarbure fluorochloré gazeux chauffé.

10. Installation suivant la revendication 1, caractérisée par le fait qu'un séparateur magnétique (25) est disposé en aval de l'unité de séparation (8).
